# FASCICULE DE BREVET EUROPEEN

(11) **EP 3 405 333 B1**
(45) Date de publication et mention de la délivrance du brevet: **28.09.2022**
(21) Numéro de dépôt: 17703917.9
(22) Date de dépôt: 09.01.2017
(51) Int. Cl.: B30B 9/32, B23D 31/00

(54) **MÉTHODE DE TRAVAIL POUR LE TRAITEMENT DE FERRAILLES SUR UN CHANTIER DE RECYCLAGE DE FERRAILLES ET PRESSE-CISAILLE OU PRESSE OU CISAILLE UTILISÉE POUR CETTE MÉTHODE**
VERFAHREN ZUM BEARBEITEN VON METALLSCHROTT AUF EINER METALLSCHROTTRECYCLINGSTELLE UND BEI DIESEM VERFAHREN EINGESETZTE SCHERPRESSE ODER PRESSE ODER SCHEREN
METHOD OF WORKING FOR PROCESSING SCRAP METAL ON A SCRAP-METAL RECYCLING SITE, AND SHEARING PRESS OR PRESS OR SHEARS EMPLOYED IN THIS METHOD

(30) Priorité: 22.01.2016 BE 201605052
(43) Date de publication de la demande: 28.11.2018
(60) Demande divisionnaire: 21168962.5
(73) Titulaire: Presses et Cisailles Lefort, 6041 Gosselies (BE)
(72) Inventeur: LEFORT, Christian Yvon N., 1380 Lasne (BE)
(74) Mandataire: Gevers Patents
(86) Numéro de dépôt international: PCT/BE2017/000008
(87) Numéro de publication internationale: WO 2017/124157

(56) Documents cités:
- EP-A1- 2 177 270
- JP-A- S5 689 400
- JP-A- H01 197 099
- JP-A- H02 155 598
- JP-U- H0 281 795
- JP-U- H0 281 796
- KR-B1- 101 064 107
- KR-B1- 101 144 823
- US-A- 2 816 502
- US-A- 3 196 726
- US-A- 3 554 119
- US-A- 3 730 078
- US-A- 3 859 910
- US-A- 4 685 391
- US-A- 4 697 509

## Description

L'invention concerne une méthode de travail pour le traitement de ferrailles sur un chantier de recyclage de ferrailles et une presse-cisaille ou une presse ou cisaille utilisée pour cette méthode.

Dans ce qui suit le terme presse-cisaille couvrira aussi bien les presses de ferrailles, que les cisailles de ferrailles que la presse-cisaille proprement dit.

Une presse-cisaille à ferraille est destinée à couper et/ou compacter des déchets de métal de grande envergure, tels que ferrailles de ramassage, ferrailles de démolition ou similaires qui sont stockées sur un chantier de recyclage de ferraille dans des zones pourvues à cette fin.

Les ferrailles coupées et compactées sont temporairement rassemblées dans une zone du chantier proche de la presse-cisaille et séparée des zones où des ferrailles traitées.

Une presse-cisaille comprend d'une manière générale un bac de chargement pour recevoir une quantité de ferrailles à traiter et qui est pourvue d'une sortie sous forme d'un portique guillotine verticale avec des lames coupantes pour sectionner les ferrailles qui sont dégagées du bac à travers la sortie au moyen d'un poussoir hydraulique qui est ensuite rétracté pour recharger le bac vide avec une nouvelle quantité de ferraille à traiter. Une telle presse-cisaille est connue du document EP 2177270 A1, lequel montre une presse-cisaille selon le préambule de la revendication 12.

Les ferrailles sont ainsi consécutivement traitées bac après bac. Le cycle de la presse-cisaille prend un certain temps pour effectuer le travail. En fin de cycle, la machine s'arrête et attend un nouveau chargement.

Les chantiers de ferrailles sont généralement équipés d'une presse-cisailles statique qui est généralement alimentée par un engin de chargement mobile, par exemple une grue équipée d'un grappin, d'un électro-aimant ou autre équipement pour aller chercher les ferrailles à traiter et de les déposer dans le bac.

Plusieurs déplacements de la grue sont nécessaires pour remplir suffisamment le bac de chargement de la presse-cisaille.

Pendant le cycle de la presse-cisaille la grue d'alimentation doit effectuer des allers-retours de plus en plus longs pour aller chercher la ferraille à traiter stockée sur le chantier.

Après chaque cycle de la presse-cisaille la grue est utilisée pour récupérer les ferrailles traitées à la sortie de la presse-cisaille et pour les déposer vers la zone de stockage prévue à cette fin, ce qui nécessite de nouveaux déplacements.

Les volumes de matière à traiter étant importants, les déplacements de la grue sont nombreux et de plus en plus longs puisque le stock de ferraille est de plus en plus éloigné de la presse-cisaille statique, ce qui implique des pertes de temps, une consommation importante de gasoil, des bruits dus aux déplacements, les dangers dus aux déplacements, l'usure de la grue, etc.

Une presse-cisaille statique présente donc quelques inconvénients par son immobilité, notamment :
- que la ferraille à traiter doit venir à la machine ;
- que la ferraille traitée doit être dégagée et déplacée après traitement pour ne pas obstruer l'évacuation consécutive d'une nouvelle quantité de ferraille traitée de la presse-cisaille ;
- qu'aucune adaptation n'est possible à l'évolution géographique du chantier de ferraille ;
- que la presse-cisaille doit attendre que la ferraille à traiter arrive dès que le stock de cette ferraille à traiter est trop éloigné.

Il existe aussi des presses-cisailles tractées, mais ces presses-cisailles sont généralement utilisées comme presses-cisailles statiques puisque le convoi exceptionnel qu'une telle presse-cisaille tractée est contraignant, par ses dimensions et son poids, et présente l'inconvénient d'être très peu maniable et nécessite de grandes zones de manœuvre et un engin de traction.

En réalité les presses-cisailles tractées sont déplaçables de chantier en chantier mais difficilement à l'intérieur d'un chantier.

Ces presses-cisailles tractées ont les mêmes inconvénients que les presses-cisailles statiques, mais en surplus sont aussi confrontées avec les inconvénients suivants:
- l'obligation d'utiliser un tracteur pour semi-remorque ;
- que le tracteur doit être détaché lors du travail de la presse-cisaille pour des raisons évidentes de protection de la chute des ferrailles déplacées par la grue ;
- qu'il faut plusieurs minutes pour regonfler les circuits pneumatiques du tracteur avant tout déplacement du convoi ;
- qu'il faut replier les béquilles de stabilisation de la presse-cisaille avant tout déplacement du convoi formé par le tracteur et la presse-cisaille ;
- qu'il faut dégager le sol de toutes les ferrailles tombées lors du chargement de la presse-cisaille afin d'éviter la détérioration des pneumatiques, des circuits de freinage, de suspension et des câblages électriques avant tout déplacement du convoi ;
- qu'il faut arrêter le moteur principal de la presse-cisaille avant tout déplacement du convoi pour des raisons de sécurité.

Après chaque déplacement de la presse-cisaille tractée, on est confronté avec les mêmes inconvénients puisqu'à chaque fois il faut refaire toutes les opérations et manœuvres inverses lors du nouveau positionnement de la presse-cisaille.

L'invention a pour but d'éviter un ou plusieurs de ces inconvénients susdits et de procurer une méthode de travail plus efficace pour traiter les ferrailles sur un chantier de récupération de ferraille en utilisant une presse-cisaille automotrice.

Ce but est atteint selon l'invention par une méthode de travail pour le traitement des ferrailles stockées sur un chantier de récupération de ferrailles selon la revendication 1.

L'avantage de l'invention consiste en une possibilité plus rationnelle d'utiliser une presse-cisaille conventionnelle en la dotant d'une mobilité autonome permettant à l'opérateur de l'engin de chargement qui charge la presse-cisaille de ferrailles à traiter, d'évoluer dans un chantier de ferrailles sans devoir faire de multiples déplacements de plus en plus longs, voir même de supprimer complètement ces déplacements.

L'engin de chargement est un engin mobile de façon à ce que les deux machines, c'est-à-dire la presse-cisaille et l'engin de chargement puisse se déplacer simultanément pour que les machines soient toujours proches l'une par rapport à l'autre, dans le but de minimaliser également les déplacements.

La presse-cisaille automotrice est pourvue d'une commande à distance qui est de préférence utilisée par l'opérateur de l'engin de chargement pour commander les déplacements et l'opération de la presse-cisaille.

L'opérateur pourra ainsi travailler seul de la manière la plus rationnelle en pouvant diminuer, voire supprimer, les déplacements de la grue.

La presse-cisaille comprend de préférence uniquement un seul moteur qui sert aussi bien pour l'opération de la presse-cisaille que pour l'opération des moyens de déplacement de la presse-cisaille. Ainsi on évite le coût d'un deuxième moteur pour la traction et la nécessité de prévoir de la place supplémentaire pour un tel moteur.

Le chantier de ferraille peut être organisé de tel sorte que le trajet qui doit être parcouru par l'ensemble de la presse-cisaille et de l'engin de chargement soit un trajet principalement rectiligne ou curviligne, ce qui nécessite les moindres déplacements et manœuvres avec un gain de temps.

Le trajet parcouru par la presse-cisaille est parcouru avec la sortie de la presse-cisaille pour dégager les ferrailles traitée dirigée vers l'arrière, c'est-à-dire dans le sens opposé du sens trajet parcouru.

Ainsi les ferrailles traités sont laissés sur place sans qu'elles puissent gêner les déplacements de la presse-cisaille et en laissant les ferrailles traitées alignées le long de parcours rectiligne ou curviligne, ce qui rend plus facile le ramassage de ces ferrailles pour être transportées.

L'invention concerne aussi une presse-cisaille pour l'application de la méthode selon l'invention, s'agissant d'une presse-cisaille selon la revendication 12.

Les avantages d'une presse-cisaille selon l'invention par rapport à une presse-cisaille statique ou tractée en combinaison avec un engin de chargement peuvent être résumés comme suit :
- la presse-cisaille automotrice évolue en même temps que la grue qui l'alimente en ferrailles à traiter ;
- les longs déplacements allers/retours de chargement sont fortement diminués voire supprimés puisque la presse-cisaille automotrice suit les déplacements de l'engin de chargement ;
- lié à la réduction des déplacements de l'engin de chargement :
   - moins d'usure ;
   - moins de bruit ;
   - moins de danger d'accidents ;
   - moins de pollution ;
   - économie de carburant ;
- gain de temps pour la presse-cisaille automotrice puisque :
   - la presse-cisaille ne doit pas attendre le chargement par l'engin de chargement ;
   - pas besoin de dégager la matière traitée qui sort de la presse-cisaille automotrice puisque la presse-cisaille automotrice peut avancer après chaque fin de cycle ;
   - la presse-cisaille automotrice peut-être mise au travail immédiatement dès l'arrivée sur site ;
- en raison du gain de temps pour la presse-cisaille :
   - moins de pollution pour la presse-cisaille ;
   - économie de carburant pour la presse-cisaille ;
   - meilleur rendement global ;
- augmentation d'un grand pourcentage du volume de stockage de ferrailles à traiter sur le chantier car la zone de manœuvre de l'engin de chargement et de la presse-cisaille automotrice est réduite.

La presse-cisaille est de préférence munie de chenilles de traction pour son déplacement, ce qui donne une grande maniabilité de la presse-cisaille automotrice car possibilité de rotation sur place sur 360°, permettant une zone de manœuvre réduite et donc augmentation du volume de stockage de ferrailles.

Une presse-cisaille sur chenilles peut d'ailleurs évoluer sur des sites accidentés.

La longueur totale de la presse-cisaille automotrice est aussi fortement diminuée par rapport à une presse-cisaille statique ou tractée.

La presse-cisaille est de préférence dimensionnée pour être transportée sur la route sur une remorque porte engins.

Beaucoup de ces avantages sont aussi vrais pour un engin de chargement statique comme la superstructure d'une grue qui est montée d'une manière rotative sur une colonne statique.

Pour plus de clarté, un exemple de réalisation d'une presse-cisaille à ferraille selon l'invention est décrite ci-après à titre illustratif et non restrictif, référence étant faite aux dessins annexés dans lesquels:
La figure 1 est une vue latérale schématique d'une cisaille à ferraille selon l'état de l'art dans une situation de fonctionnement normal ;
la figure 2 montre la cisaille de la figure 1 en état de fonctionnement avec évacuation des ferrailles traitées ;
la figure 3 montre l'organisation d'un chantier classique de récupération de ferrailles avec un presse-cisaille statique comme celle de la figure 1 ;
la figure 4 est une vue latérale comme celle de la figure 1 mais pour une presse-cisaille automotrice selon l'invention ;
la figure 5 est une vue en élévation suivant la flèche F5 dans la figure 4 ;
la figure 6 est une illustration de l'organisation d'un chantier de ferrailles permettant de pratiquer la méthode de travail selon l'invention avec une presse-cisaille automotrice selon les figures 4 et 5.

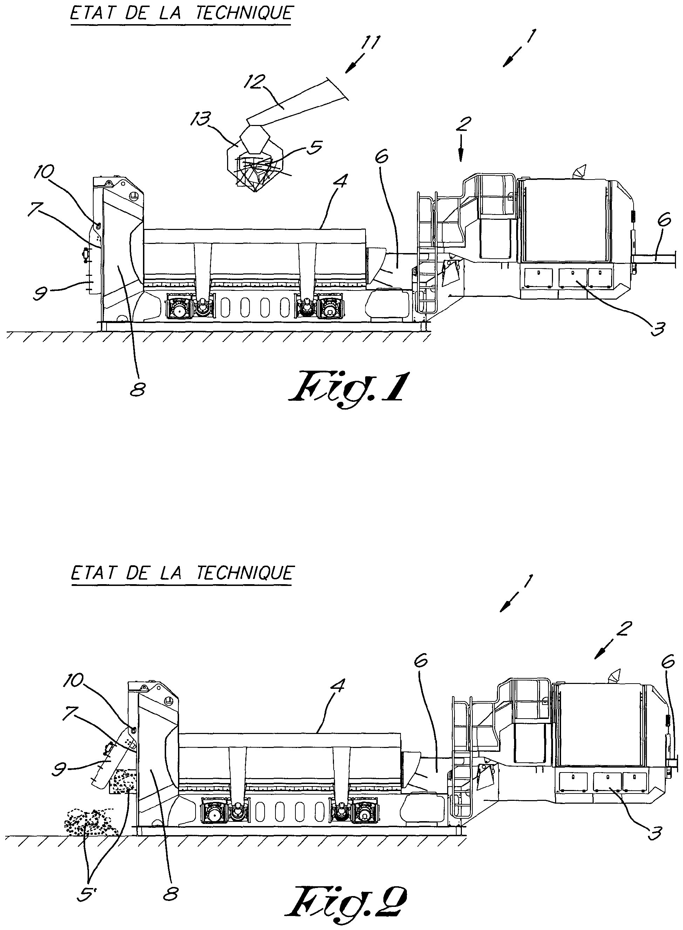

La presse-cisaille à ferraille statique 1 représentée dans la figure 1 comprend une cabine de commande 2 ; un groupe hydraulique 3 ; un bac 4 pour recevoir les ferrailles à couper 5 ; un poussoir horizontal 6 pour dégager les ferrailles 5 du bac 4 à travers une sortie 7 qui est formée par un portique 8 qui, d'une manière connue, est muni de lames coupantes et/ou d'une presse non représentées pour couper et comprimer les ferrailles 5 avant d'être dégagées du bac par la sortie 7 qui est couverte par une trappe 9 de protection pivotable librement autour de son axe 10.

Le bac de la presse-cisaille 1 est rempli au moyen d'un engin mobile 11 du type grue dont uniquement le bras 12 est montré dans la figure 1 avec à son bout un grappin 13 pour prendre les ferrailles à traiter 5 et de les déposer dans le bac 4, comme illustré dans la figure 1.

La presse-cisaille 1 est une presse-cisaille classique statique, c'est-à-dire immobile, qui est placée à un endroit fixe du chantier 14.

Le chantier 14 est accessible par un accès 15 pour l'approvisionnement des ferrailles à traiter 5, lequel fait aussi office de sortie pour l'évacuation des ferrailles traitées 5'.

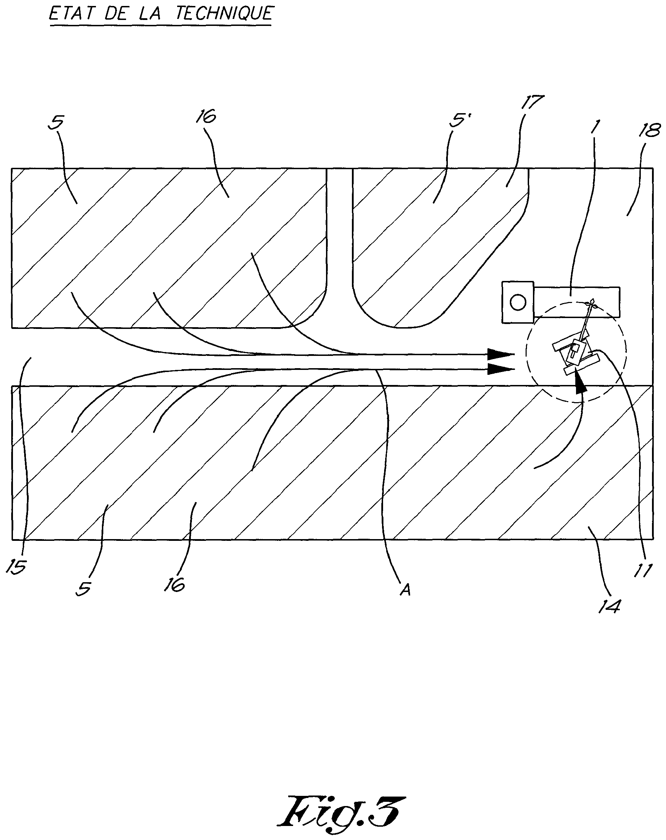

Le chantier 14 est organisé d'une manière classique comme représenté dans la figure 3 avec des zones de stockage 16 pour les ferrailles à traiter 5 et en zones de stockage 17 pour les ferrailles traitées 5' par la presse-cisaille 1.

Entre les zones 16 et 17 se trouvent des chemins et zones de manœuvre 18 dans lesquelles l'engin de chargement 11 peut manœuvrer pour aller chercher les ferrailles 5 dans les zones 16 pour les déposer dans le bac 4 et pour récupérer les ferrailles traitées 5' à la sortie 7 de la presse-cisaille pour les déposer dans les zones 17 et pour donner accès aux camions et remorques.

Les trajets parcourus par l'engin de chargement 11 sont indiqués par les flèches A, illustrant que ces trajets A deviennent de plus en plus longs au fur et à mesure que les ferrailles 5 sont traitées.

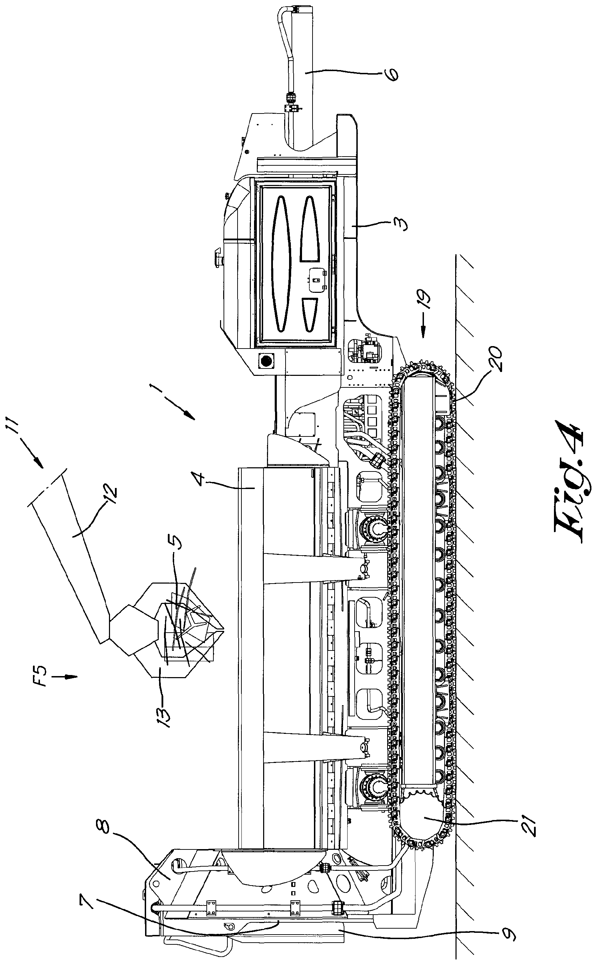

La figure 4 montre un exemple d'une presse-cisaille 1 selon l'invention, qui, dans le cas représenté est une presse-cisaille automotrice 1 équipée de moyens de déplacements et de traction 19 sous forme d'un train de chenilles avec deux chenilles 20, chaque chenille 20 pouvant être entraînée individuellement par son propre moteur hydraulique 21, permettant ainsi de faire tourner la presse-cisaille sur place.

La presse-cisaille 1 selon l'invention est d'une façon analogue à la presse-cisaille 1 stationnaire de la figure 1 équipée d'un bac de remplissage 4, d'un poussoir 6, d'un portique 8 avec lames coupantes et presse et avec une sortie 7 fermée par une trappe de protection 9 pivotable.

La presse-cisaille 1 est pourvue d'un groupe hydraulique 3, de préférence avec un seul moteur thermique ou électrique, pour l'alimentation des vérins et moteurs hydrauliques du poussoir 6, des lames et de la presse, ainsi que les moteurs hydrauliques 21 du train de chenilles 20 et éventuellement d'autres fonctions hydrauliques.

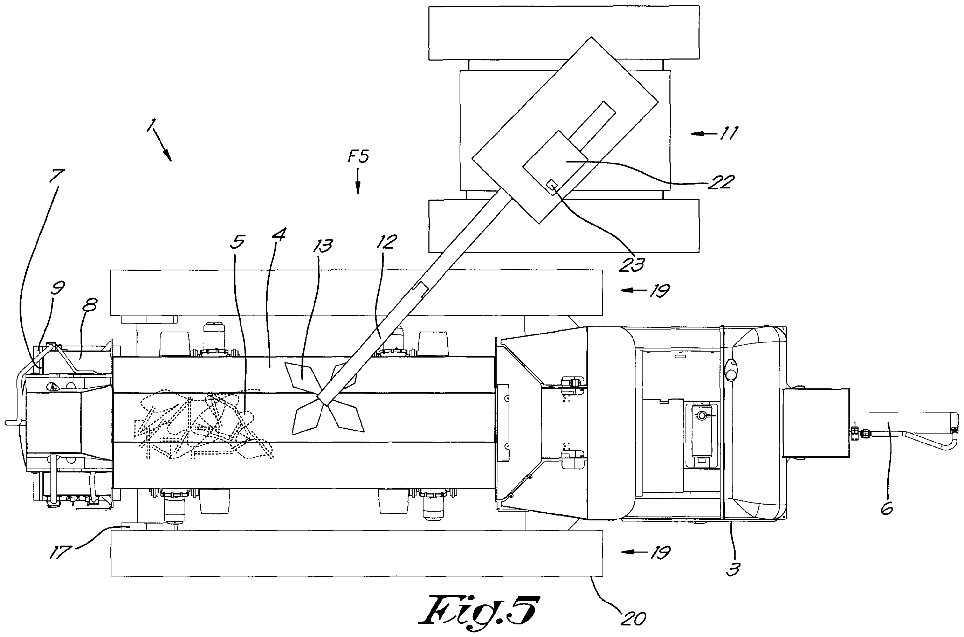

Le chargement de la presse-cisaille peut se faire au moyen d'un engin de chargement 11 comme illustré dans la figure 5, par exemple avec une grue à chenilles comme engin de chargement 11, équipé de préférence avec une cabine 22 surélevé pour l'opérateur de l'engin 11, afin d'avoir une bonne vue sur le chargement de la presse-cisaille.

La presse-cisaille est pourvue d'une commande à distance 23 pour les fonctions presse, cisaille et traction de la presse cisaille, commande qui est montée dans la cabine 22 de l'engin de chargement 11 ou que l'opérateur peut amener dans sa cabine 22 de façon à pouvoir contrôler les opérations de la presse-cisaille 1 sans devoir sortir de sa cabine 22 et de déplacer les deux machines 1 et 11 pour rester à proximité l'une de l'autre pendant le chargement.

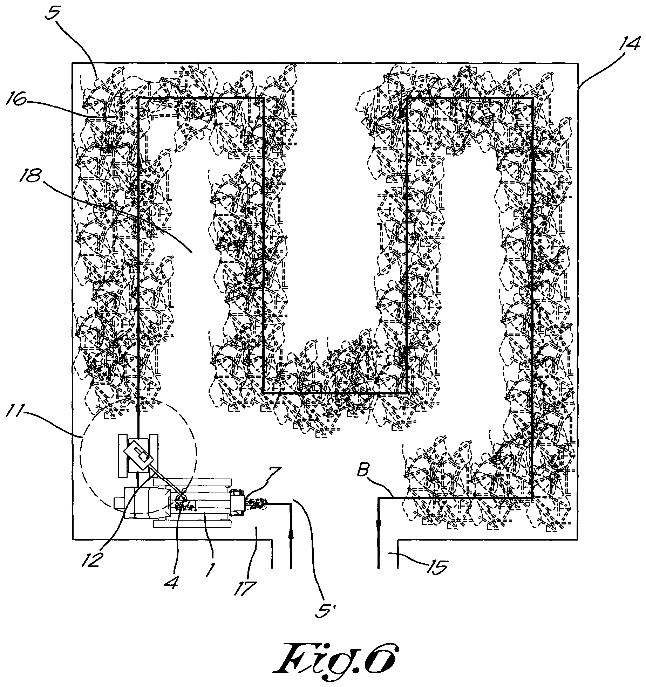

Dans le cas de l'invention le chantier 14 est organisé comme représenté dans la figure 6, qui montre que les ferrailles à traiter 5 sont entassées dans une zone 16 le long d'un trajet curviligne qui est indiqué par B et qui est suivi par l'ensemble de la presse-cisaille 1 et de l'engin de chargement lors du traitement cyclique des ferrailles.

Dans un premier temps la presse-cisaille 1 est positionnée au début de la zone 16 curviligne avec l'engin de chargement à proximité pour prendre les ferrailles à traiter 5 et de remplir de bac 4 de la presse-cisaille 1.

La presse-cisaille 1 est ensuite mise en marche pour effectuer un cycle te traitement pour couper et comprimer le contenu du bac 4 qui, à la fin du cycle de la presse-cisaille 1, est évacué par la sortie à l'arrière de la presse-cisaille 1.

Puis, la presse-cisaille 1 et l'engin 11 sont déplacés le long de la zone 16 pour un nouveau remplissage et un nouveau cycle de la presse-cisaille 1 pour couper et compacter les ferrailles.

Puisque les ferrailles traitées sont éjectées à l'arrière de la presse-cisaille et que celle-ci est déplacée vers l'avant, les ferrailles éjectées ne gênent pas le déplacement de la presse-cisaille 1 et de l'engin de chargement 11.

Les ferrailles traitées 5' qui sont dégagées de la presse-cisaille 1 restent sur place le long du trajet B qui est maintenant dégagé de ferrailles, permettant un accès facile pour être chargées sur camions.

Le trajet B est de préférence un trajet bouclé avec son point de départ et sa fin proches de l'accès 15.

Pendant que les deux machines 1 et 11 suivent le trajet vers la fin de trajet B, une nouvelle quantité de ferrailles à traiter peut être déposée le long de la zone 16 dégagée de façon à ce que quand les machines arrivent à la fin du boucle B, il peuvent attaquer la nouvelle quantité de ferraille sans attendre.

Il est clair que les moyens de déplacement 19 de la presse-cisaille 1 ne doivent pas nécessairement être réalisés sous forme de chenilles, mais que par exemple une presse-cisaille 1 automotrice sur roues convient également pour l'invention.

Sur certains chantiers, l'engin de chargement est une machine immobile, par exemple sous forme d'une tourelle d'une grue montée sur colonne et pouvant prendre les ferrailles tout autour du fait que la tourelle peut tourner sur 360° sur la colonne.

Une presse-cisaille automotrice selon l'invention a l'avantage de pouvoir limiter les mouvements de la tourelle et des équipements de la grue dans un secteur où les ferrailles sont stockées autour de la colonne et de permettre entretemps de renouveler le stock épuisé à un autre endroit où la presse-cisaille vient de passer.

Il est évident que l'invention n'est nullement limitée aux exemples décrits ci-avant mais que de nombreuses modifications peuvent être apportées à la cisaille de ferraille décrite ci-avant sans sortir du cadre de l'invention telle que définie dans les revendications suivantes.

## Revendications

1. Méthode de travail pour le traitement de ferrailles stockées (5) sur un chantier de récupération de ferrailles (14) en utilisant une presse-cisaille (1) munie d'un bac de remplissage (4) pour recevoir une quantité de ferrailles (5) à traiter et pourvue d'une sortie (7) sous forme d'un portique guillotine verticale (8) avec des lames coupantes pour sectionner les ferrailles (5) qui sont dégagées du bac (4) à travers la sortie au moyen d'un poussoir hydraulique (6), la presse-cisaille (1) étant pourvue d'un groupe hydraulique (3) pour l'alimentation des vérins et moteurs hydrauliques du poussoir (6), des lames et de la presse, en utilisant un engin de chargement (11) pour remplir le bac (4) avec les ferrailles à traiter (5), la presse-cisaille (1) et l'engin de chargement (11) étant deux machines aptes à se déplacer simultanément, la méthode faisant usage d'une presse-cisaille (1) automotrice, c'est-à-dire d'une presse-cisaille pourvue de ces propres moyens de déplacement (19) et d'une mobilité autonome de façon à ce qu'elle soit déplaçable à l'intérieur d'un chantier (14), et pourvue d'une commande à distance (23) configurée pour les commandes aussi bien des opérations de la presse-cisaille (1) que de son déplacement, la méthode comprenant les étapes suivantes :
- de prévoir une zone de stockage (16) avec les ferrailles à traiter (5);
- de procéder cycliquement au :
o déplacement de la presse-cisaille (1) dans la zone de stockage ou le long de la zone de stockage (16) dans la portée de l'engin de chargement (11);
o remplissage du bac (4) de la presse-cisaille (1) avec les ferrailles à traiter (5) en utilisant l'engin de chargement (11);
o faire fonctionner la presse-cisaille (1) pour traiter les ferrailles (5) chargées dans le bac (4) et pour dégager la ferraille traitée (5') par la sortie (7);
o déplacement de la presse-cisaille (1) pour le traitement d'un prochain tas de ferrailles à traiter (5) en laissant sur place les ferrailles traitées (5') dégagées du bac (4).

2. Méthode de travail selon la revendication 1, **caractérisée en ce que** le chantier (14) est organisé tel que les ferrailles à traiter (5) sont entassées dans une zone (16) le long d'un trajet curviligne qui est indiqué par (B) et qui est suivi par l'ensemble de la presse-cisaille (1) et de l'engin de chargement (11) lors du traitement cyclique des ferrailles, et que :
a) dans un premier temps la presse-cisaille (1) est positionnée au début de la zone (16) curviligne avec l'engin de chargement à proximité pour prendre les ferrailles à traiter (5) et de remplir de bac (4) de la presse-cisaille (1);
b) la presse-cisaille (1) est ensuite mise en marche pour effectuer un cycle de traitement pour couper et comprimer le contenu du bac (4) qui, à la fin du cycle de la presse-cisaille (1), est évacué par la sortie à l'arrière de la presse-cisaille (1);
c) puis, la presse-cisaille (1) et l'engin de chargement (11) sont déplacés le long de la zone (16) pour un nouveau remplissage et un nouveau cycle de la presse-cisaille (1) pour couper et compacter les ferrailles.

3. Méthode de travail selon la revendication 2, **caractérisée en ce que** pendant que les deux machines (1) (11) suivent le trajet vers la fin de trajet (B), une nouvelle quantité de ferrailles à traiter peut être déposée le long de la zone (16) dégagée de façon à ce que, quand les machines arrivent à la fin du boucle (B), elles peuvent attaquer la nouvelle quantité de ferraille sans attendre.

4. Méthode de travail selon l'une quelconque des revendications précédentes, **caractérisée en ce que** la presse-cisaille (1) automotrice suit les déplacements de l'engin de chargement (11).

5. Méthode de travail selon l'une quelconque des revendications précédentes, **caractérisée en ce que** le trajet (B) de la presse-cisaille (1) est parcouru avec la sortie de la presse-cisaille (1) dirigée vers l'arrière, c'est-à-dire dirigée dans le sens opposé de la direction des déplacements le long du trajet (B).

6. Méthode de travail selon l'une quelconque des revendications précédentes, **caractérisée en ce que** le chantier de récupération des ferrailles (14) est organisé de tel sorte que la zone de stockage (16) des ferrailles à traiter s'étend le long d'un parcours rectiligne ou curviligne.

7. Méthode de travail selon l'une quelconque des revendications précédentes, **caractérisée en ce que** la zone de stockage (16) s'étend le long d'un parcours avec un point de départ proche de l'entrée du chantier et un point d'arrivé proche de la sortie du chantier (14), et **en ce que** l'entrée et la sortie du chantier (14) sont proche l'une de l'autre ou coïncident.

8. Méthode de travail selon l'une quelconque des revendications précédentes, **caractérisée en ce que** la commande à distance (23) est utilisée par l'opérateur de l'engin de chargement (11) pour déplacer la presse-cisaille (1) après chaque cycle de traitement de la presse-cisaille (1) afin de pouvoir commencer le chargement de la presse-cisaille (1) avec une nouvelle quantité de ferrailles (5) à traiter pour un nouveau cycle de la presse-cisaille (1).

9. Méthode de travail selon l'une quelconque des revendications précédentes, **caractérisée en ce que** la commande à distance est utilisée par l'opérateur de l'engin de chargement (11) pour démarrer et arrêter l'opération de la presse-cisaille (1).

10. Méthode de travail selon l'une quelconque des revendications précédentes, **caractérisée en ce que** l'opérateur peut travailler seul.

11. Méthode de travail selon l'une quelconque des revendications précédentes, **caractérisée en ce que** le chargement de la presse-cisaille (1) peut se faire au moyen d'un engin de chargement (11) avec une grue à chenilles, équipée de préférence avec une cabine (22) surélevée pour l'opérateur de l'engin (11), afin d'avoir une bonne vue sur le chargement de la presse-cisaille (1), la presse-cisaille (1) est pourvue d'une commande à distance (23) pour les fonctions presse, cisaille et traction de la presse cisaille, une commande (23) qui est montée dans la cabine (22) de l'engin de chargement (11) ou que l'opérateur peut amener dans sa cabine (22) de façon à pouvoir contrôler les opérations de la presse-cisaille (1) sans devoir sortir de sa cabine (22) et de déplacer les deux machines (1) et (11) pour rester à proximité l'une de l'autre pendant le chargement.

12. Presse-cisaille pour le traitement de ferrailles (5) selon la méthode de l'une quelconque des revendications précédentes, la presse-cisaille (1) étant munie d'un bac de remplissage (4) pour recevoir une quantité de ferrailles (5) à traiter et pourvue d'une sortie (7) sous forme d'un portique guillotine verticale (8) avec des lames coupantes pour sectionner les ferrailles (5) qui sont dégagées du bac (4) à travers la sortie au moyen d'un poussoir hydraulique (6), la presse-cisaille (1) étant pourvue d'un groupe hydraulique (3) pour l'alimentation des vérins et moteurs hydrauliques du poussoir (6), des lames et de la presse, **caractérisée en ce que** c'est une presse-cisaille (1) automotrice, c'est-à-dire une presse-cisaille (1) pourvue de ses propres moyens de déplacement (19) et d'une mobilité autonome de façon à ce qu'elle soit déplaçable à l'intérieur d'un chantier (14), ladite presse-cisaille (1) se déplaçant vers l'avant, ladite presse-cisaille (1) étant configurée pour éjecter les ferrailles traitées (5') par l'arrière, **et en ce qu'**elle est pourvue d'une commande à distance (23) configurée pour les commandes aussi bien des opérations de la presse-cisaille (1) que de son déplacement.

13. Presse-cisaille selon la revendication 12, **caractérisée en ce que** ses propres moyens de déplacement (19) comprennent une des chenilles de traction (20) ou de roues avec lesquelles la presse-cisaille (1) repose parterre.

14. Presse-cisaille selon l'une quelconque des revendications 12 à 13, **caractérisée en ce qu'**elle comprend un seul moteur qui sert aussi bien pour la commande de la presse-cisaille (1) que pour la commande des moyens de déplacement (19).

15. Presse-cisaille (1) selon l'une quelconque des revendications 12 à 14, **caractérisée en ce qu'**elle est pourvue d'un groupe hydraulique (3), de préférence avec un seul moteur thermique ou électrique, pour l'alimentation des vérins et moteurs hydrauliques du poussoir (6), des lames et de la presse, ainsi que les moteurs hydrauliques (21) du train de chenilles (20) et éventuellement d'autres fonctions hydrauliques.

16. Presse-cisaille (1) selon l'une quelconque des revendications 12 à 15, **caractérisée en ce que** la presse-cisaille automotrice (1) est équipée de moyens de déplacements et de traction (19) sous forme d'un train de chenilles avec deux chenilles (20), chaque chenille (20) pouvant être entraînée individuellement par son propre moteur hydraulique (21), permettant ainsi de faire tourner la presse-cisaille sur place.

17. Presse-cisaille (1) selon l'une quelconque des revendications 12 à 16, **caractérisée en ce que** le chargement de la presse-cisaille (1) se fait au moyen d'un engin de chargement (11) avec une grue à chenilles, et que la presse-cisaille (1) est pourvue d'une commande à distance (23) pour les fonctions presse, cisaille et traction de la presse-cisaille, une commande (23) qui est montée dans la cabine (22) de l'engin de chargement (11) ou que l'opérateur peut amener dans sa cabine (22) de façon à pouvoir contrôler les opérations de la presse-cisaille (1) sans devoir sortir de sa cabine (22) et de déplacer les deux machines (1) et (11) pour rester à proximité l'une de l'autre pendant le chargement.

18. Presse-cisaille selon l'une quelconque des revendications 12 à 17, **caractérisée en ce qu'**elle est dimensionnée de sorte à être transportable sur la route sur une remorque porte engins.

## Patentansprüche

1. Arbeitsverfahren zum Bearbeiten von gelagertem Metallschrott (5) auf einer Metallschrottrecyclingstelle (14) unter Verwendung einer Scherpresse (1), die mit einer Füllwanne (4) versehen ist, um eine Menge an zu bearbeitendem Metallschrott (5) aufzunehmen, und mit einem Ausgang (7) in Form eines vertikalen Fallrahmens (8) mit schneidenden Klingen ausgestattet ist, um den Metallschrott (5), der mithilfe eines hydraulischen Stößels (6) durch den Ausgang aus der Wanne (4) abgegeben wird, zu durchtrennen, wobei die Scherpresse (1) zur Versorgung der Antriebe und Hydraulikmotoren des Stößels (6), der Klingen und der Presse mit einer Hydraulikgruppe (3) ausgestattet ist, unter Verwendung eines Ladegeräts (11), um die Wanne (4) mit zu bearbeitendem Metallschrott (5) zu füllen, wobei die Scherpresse (1) und das Ladegerät (11) zwei Maschinen sind, die geeignet sind, gleichzeitig bewegt zu werden, wobei das Verfahren von einer selbsttreibenden Scherpresse (1) Gebrauch macht, das heißt, von einer Scherpresse, die derart mit ihren eigenen Bewegungsmitteln (19) und mit einer autonomen Mobilität ausgestattet ist, dass sie innerhalb einer Recyclingstelle (14) bewegbar ist, und mit einer Fernsteuerung (23) ausgestattet ist, die für die Steuerungen sowohl der Betriebe der Scherpresse (1) als auch ihrer Bewegung konfiguriert ist, wobei das Verfahren die folgenden Schritte umfasst:
- Vorsehen eines Lagerbereichs (16) mit dem zu bearbeitenden Metallschrott (5);
- zyklisches Vornehmen von:
- Bewegen der Scherpresse (1) im Lagerbereich oder entlang des Lagerbereichs (16) in der Reichweite des Ladegeräts (11);
- Füllen der Wanne (4) der Scherpresse (1) mit dem zu bearbeitenden Metallschrott (5) unter Verwendung des Ladegeräts (11);
- Betreiben der Scherpresse (1), um den in der Wanne (4) geladenen Metallschrott (5) zu bearbeiten und um den bearbeiteten Metallschrott (5') durch den Ausgang (7) abzugeben;
- Bewegen der Scherpresse (1) zum Bearbeiten eines nächsten zu bearbeitenden Metallschrottstapels (5), wobei der aus der Wanne (4) abgegebene bearbeitete Metallschrott (5') an Ort und Stelle gelassen wird.

2. Arbeitsverfahren nach Anspruch 1, **dadurch gekennzeichnet, dass** die Recyclingstelle (14) so organisiert ist, dass der zu bearbeitende Metallschrott (5) in einem Bereich (16) entlang einer krummlinigen Strecke gestapelt wird, die durch (B) angezeigt wird und der die Anordnung der Scherpresse (1) und das Ladegerät (11) während des zyklischen Bearbeitens des Metallschrotts folgen; und dass:
a) die Scherpresse (1) zunächst am Anfang des krummlinigen Bereichs (16) positioniert wird, mit dem Ladegerät in der Nähe, um den zu bearbeitenden Metallschrott (5) zu nehmen und die Wanne (4) der Scherpresse (1) zu füllen;
b) die Scherpresse (1) dann hochgefahren wird, um einen Bearbeitungszyklus durchzuführen, um den Inhalt der Wanne (4), der am Ende des Zyklus der Scherpresse (1) durch den Ausgang auf der Hinterseite der Scherpresse (1) abgeführt wird, zu schneiden und zu komprimieren;
c) die Scherpresse (1) und das Ladegerät (11) dann für ein neues Laden und einen neuen Zyklus der Scherpresse (1) zum Schneiden und Komprimieren des Metallschrotts entlang des Bereichs (16) bewegt werden.

3. Arbeitsverfahren nach Anspruch 2, **dadurch gekennzeichnet, dass** eine neue Menge an zu bearbeitendem Metallschrott entlang des freigelegten Bereichs (16) angeordnet werden kann, während die zwei Maschinen (1) (11) der Strecke zum Ende der Strecke (B) hin folgen, sodass die Maschinen, wenn sie am Ende der Schleife (B) ankommen, eine neue Metallschrottmenge in Angriff nehmen können, ohne zu warten.

4. Arbeitsverfahren nach einem der vorstehenden Ansprüche, **dadurch gekennzeichnet, dass** die selbsttreibende Scherpresse (1) den Bewegungen des Ladegeräts (11) folgt.

5. Arbeitsverfahren nach einem der vorstehenden Ansprüche, **dadurch gekennzeichnet, dass** die Strecke (B) der Scherpresse (1) mit dem Ausgang der Scherpresse (1) zur Hinterseite ausgerichtet durchlaufen wird, das heißt, in der Richtung entgegengesetzt zur Richtung der Bewegungen entlang der Strecke (B).

6. Arbeitsverfahren nach einem der vorstehenden Ansprüche, **dadurch gekennzeichnet, dass** die Metallschrottrecyclingstelle (14) so organisiert ist, dass sich der Lagerbereich (16) des zu bearbeitenden Metallschrotts entlang eines geradliniges oder krummlinigen Verlaufs erstreckt.

7. Arbeitsverfahren nach einem der vorstehenden Ansprüche, **dadurch gekennzeichnet, dass** sich der Lagerbereich (16) entlang eines Verlaufs mit einem Startpunkt nahe dem Eingang der Recyclingstelle und einem Ankunftspunkt nahe dem Ausgang der Recyclingstelle (14) erstreckt und dadurch, dass der Eingang und der Ausgang der Recyclingstelle (14) nahe beieinanderliegen oder zusammenfallen.

8. Arbeitsverfahren nach einem der vorstehenden Ansprüche, **dadurch gekennzeichnet, dass** die Fernsteuerung (23) von dem Bediener des Ladegeräts (11) zum Bewegen der Scherpresse (1) nach jedem Bearbeitungszyklus der Scherpresse (1) verwendet wird, um das Laden der Scherpresse (1) mit einer neuen Menge an zu bearbeitendem Metallschrott (5) für einen neuen Zyklus der Scherpresse (1) starten zu können.

9. Arbeitsverfahren nach einem der vorstehenden Ansprüche, **dadurch gekennzeichnet, dass** die Fernsteuerung von dem Bediener des Ladegeräts (11) zum Starten und Unterbrechen des Betriebs der Scherpresse (1) verwendet wird.

10. Arbeitsverfahren nach einem der vorstehenden Ansprüche, **dadurch gekennzeichnet, dass** der Bediener allein arbeiten kann.

11. Arbeitsverfahren nach einem der vorstehenden Ansprüche, **dadurch gekennzeichnet, dass** das Laden der Scherpresse (1) mittels eines Ladegeräts (11) mit einem Raupenkran erfolgen kann, das vorzugsweise mit einer hochliegenden Kabine (22) für den Bediener des Geräts (11) versehen ist, um eine gute Sicht auf das Laden der Scherpresse (1) zu haben, wobei die Scherpresse (1) mit einer Fernsteuerung (23) für die Funktionen Presse, Schere und Zug der Scherpresse ausgestattet ist, einer Steuerung (23), die in der Kabine (22) des Ladegeräts (11) montiert ist oder die der Bediener in seine Kabine (22) nehmen kann, um die Betriebe der Scherpresse (1) steuern zu können, ohne seine Kabine (22) verlassen zu müssen und die zwei Maschinen (1) und (11) so zu bewegen, dass sie während des Ladens nahe beieinander bleiben.

12. Scherpresse zum Bearbeiten von Metallschrott (5) gemäß dem Verfahren nach einem der vorstehenden Ansprüche, wobei die Scherpresse (1) mit einer Füllwanne (4) versehen ist, um eine Menge an zu bearbeitendem Metallschrott (5) aufzunehmen, und mit einem Ausgang (7) in Form eines vertikalen Fallrahmens (8) mit schneidenden Klingen ausgestattet ist, um den Metallschrott (5), der mittels eines hydraulischen Stößels (6) durch den Ausgang aus der Wanne (4) abgegeben wird, zu durchtrennen, wobei die Scherpresse (1) zur Versorgung der Antriebe und Hydraulikmotoren des Stößels (6), der Klingen und der Presse mit einer Hydraulikgruppe (3) ausgestattet ist, **dadurch gekennzeichnet, dass** es eine selbsttreibende Scherpresse (1) ist, das heißt, eine Scherpresse (1), die derart mit ihren eigenen Bewegungsmitteln (19) und mit einer autonomen Mobilität ausgestattet ist, dass sie innerhalb einer Recyclingstelle (14) bewegbar ist, wobei sich die Scherpresse (1) nach vorne bewegt, wobei die Scherpresse (1) konfiguriert ist, um den bearbeiteten Metallschrott (5') auf der Hinterseite auszugeben, **und dadurch, dass** sie mit einer Fernsteuerung (23) ausgestattet ist, die für die Steuerungen sowohl der Betriebe der Scherpresse (1) als auch ihrer Bewegung konfiguriert ist.

13. Scherpresse nach Anspruch 12, **dadurch gekennzeichnet, dass** ihre eigenen Bewegungsmittel (19) einen der Raupenzüge (20) oder Räder, mit denen die Scherpresse (1) auf dem Boden ruht, umfasst.

14. Scherpresse nach einem der Ansprüche 12 bis 13, **dadurch gekennzeichnet, dass** sie einen einzigen Motor umfasst, der sowohl der Steuerung der Scherpresse (1) als auch der Steuerung der Bewegungsmittel (19) dient.

15. Scherpresse (1) nach einem der Ansprüche 12 bis 14, **dadurch gekennzeichnet, dass** sie mit einer Hydraulikgruppe (3), vorzugsweise mit einem einzigen thermischen oder elektrischen Motor, für die Versorgung der Antriebe und Hydraulikmotoren des Stößels (6), der Klingen und der Presse, sowie der hydraulischen Motoren (21) des Raupenzugs (20) und gegebenenfalls andere hydraulische Funktionen ausgestattet ist.

16. Scherpresse (1) nach einem der Ansprüche 12 bis 15, **dadurch gekennzeichnet, dass** die selbsttreibende Scherpresse (1) mit Bewegungs- und Zugmittel (19) in Form eines Raupenzugs mit zwei Raupen (20) versehen ist, wobei jede Raupe (20) über ihren eigenen Hydraulikmotor (21) einzeln angetrieben werden kann, wodurch ermöglicht wird, die Scherpresse stationär zu drehen.

17. Scherpresse (1) nach einem der Ansprüche 12 bis 16, **dadurch gekennzeichnet, dass** das Laden der Scherpresse (1) mittels eines Ladegeräts (11) mit einem Raupenkran erfolgt und dass die Scherpresse (1) mit einer Fernsteuerung (23) für die Funktionen Presse, Schere und Zug der Scherpresse ausgestattet ist, einer Steuerung (23), die in der Kabine (22) des Ladegeräts (11) montiert ist oder die der Bediener in seine Kabine (22) nehmen kann, um die Betriebe der Scherpresse (1) steuern zu können, ohne seine Kabine (22) verlassen zu müssen und die zwei Maschinen (1) und (11) so zu bewegen, dass sie während des Ladens nahe beieinander bleiben.

18. Scherpresse nach einem der Ansprüche 12 bis 17, **dadurch gekennzeichnet, dass** sie derart dimensioniert ist, dass sie auf der Straße auf einem Maschinenträgeranhänger transportierbar ist.

## Claims

1. Working method for processing scrap metal (5) stored on a scrap-metal collecting site (14) using a shear press (1) provided with a filling tray (4) for receiving a quantity of scrap metal (5) to be processed and provided with an outlet (7) in the form of a vertical guillotine gate (8) with cutting blades for cutting through the scrap metal (5) which are released from the tray (4) through the outlet by means of a hydraulic tappet (6), the shear press (1) being provided with a hydraulic unit (3) for the supply of actuators and hydraulic motors of the tappet (6), the blades and the press, using a filling vehicle (11) for filling the tray (4) with the scrap metal to be processed (5), the shear press (1) and the filling vehicle (11) being two machines capable of moving simultaneously, the method making use of a self-powered shear press (1), i.e. a shear press provided with its own movement means (19) and an autonomous mobility such that it is movable inside a site (14), and provided with a remote control (23) configured for commands, both for operations of the shear press (1) and its movement, the method comprising the following steps:
- of providing a storage zone (16) with the scrap metal to be processed (5);
- of proceeding cyclically with the:
movement of the shear press (1) in the storage zone or along the storage zone (16) in the range of the filling vehicle (11);
filling of the tray (4) of the shear press (1) with the scrap metal to be processed (5) using the filling vehicle (11);
making the shear press (1) operate to process the scrap metal (5) filled in the tray (4) and to release the processed scrap metal (5') through the outlet (7);
movement of the shear press (1) for the processing of a next pile of scrap metal to be processed (5) by leaving in place the processed scrap metal (5') released from the tray (4).

2. Working method according to claim 1, **characterised in that** the site (14) is organised such that the scrap metal to be processed (5) is piled up in a zone (16) along a curved line path which is indicated by (B) and which is followed by the whole shear press (1) and the filling vehicle (11) during the cyclical processing of the scrap metal, and that:
a) initially, the shear press (1) is positioned at the start of the curved line zone (16) with the filling vehicle in the proximity, to take the scrap metal to be processed (5) and to fill the tray (4) of the shear press (1);
b) the shear press (1) is then switched on to perform a processing cycle to cut and compress the content of the tray (4) which, at the end of the cycle of the shear press (1), is discharged through the outlet behind the shear press (1);
c) then, the shear press (1) and the filling vehicle (11) are moved along the zone (16) for another filling and another cycle of the shear press (1) to cut and compact the scrap metal.

3. Working method according to claim 2, **characterised in that** during the two machines (1, 11) follow the path to the end of the path (B), another quantity of scrap metal to be processed can be deposited along the zone (16) released such that, when the machines come to the end of the loop (B), they can attack the new quantity of scrap metal without waiting.

4. Working method according to any one of the preceding claims, **characterised in that** the self-powered shear press (1) follows the movements of the filling vehicle (11).

5. Working method according to any one of the preceding claims, **characterised in that** the path (B) of the shear press (1) is travelled with the outlet of the shear press (1) directed rearwards, i.e. directed in the direction opposite the direction of the movements along the path (B).

6. Working method according to any one of the preceding claims, **characterised in that** the scrap-metal collecting site (14) is organised such that the zone for storing (16) the scrap metal to be processed extends along a rectilinear or curved line path.

7. Working method according to any one of the preceding claims, **characterised in that** the storage zone (16) extends along a path with a starting point close to the entry of the site and an arrival point close to the exit of the site (14), and **in that** the entry and the exit of the site (14) are closed to one another, or coincident.

8. Working method according to any one of the preceding claims, **characterised in that** the remote control (23) is used by the operator of the filling vehicle (11) to move the shear press (1) after each processing cycle of the shear press (1) in order to be able to start the filling of the shear press (1) with another quantity of scrap metal (5) to be processed for another cycle of the shear press (1).

9. Working method according to any one of the preceding claims, **characterised in that** the remote control is used by the operator of the filling vehicle (11) to start up and stop the operation of the shear press (1).

10. Working method according to any one of the preceding claims, **characterised in that** the operator can work alone.

11. Working method according to any one of the preceding claims, **characterised in that** the filling of the shear press (1) can be done by means of a filling vehicle (11) with a crawler crane, equipped preferably with an elevated cabin (22) for the operator of the vehicle (11), in order to have a good view over the filling of the shear press (1), the shear press (1) is provided with a remote control (23) for the press, shearing and traction functions of the shear press, a control (23) which is mounted in the cabin (22) of the filling vehicle (11) or that the operator can bring into their cabin (22) so as to be able to control the operations of the shear press (1) without needing to exit their cabin (22) and move the two machines (1) and (11) to remain in the proximity of one another during the filling.

12. Shear press for the processing of scrap metal (5) according to the method of any one of the preceding claims, the shear press (1) being provided with a filling tray (4) for receiving a quantity of scrap metal (5) to be processed and provided with an outlet (7) in the form of a vertical guillotine gate (8) with cutting blades to cut through the scrap metal (5) which is released from the tray (4) through the outlet by means of a hydraulic tappet (6), the shear press (1) being provided with a hydraulic unit (3) for the supply of the actuators and hydraulic motors of the tappet (6), of the blades and of the press, **characterised in that** it is a self-powered shear press (1), i.e. a shear press (1) provided with its own movement means (19) and an autonomous mobility such that it is movable inside a site (14), said shear press (1) moving towards the front, said shear press (1) being configured to eject the processed scrap metal (5') rearwards, **and in that** it is provided with a remote control (23) configured for commands, both for operations of the shear press (1) and its movement.

13. Shear press according to claim 12, **characterised in that** its own movement means (19) comprise one from crawler tracks (20) or wheels on which the shear press (1) remains on the ground.

14. Shear press according to any one of claims 12 to 13, **characterised in that** it comprises one single motor which is also used for controlling the shear press (1) and for controlling the movement means (19).

15. Shear press (1) according to any one of claims 12 to 14, **characterised in that** it is provided with a hydraulic unit (3), preferably with one single thermal or electric motor, for the supply of actuators and hydraulic motors of the tappet (6), the blades and the press, as well as the hydraulic motors (21) of the crawler tracks (20) and possibly other hydraulic functions.

16. Shear press (1) according to any one of claims 12 to 15, **characterised in that** the self-powered shear press (1) is equipped with movement and traction means (19) in the form of a crawler track with two crawlers (20), each crawler (20) could be driven individually by its own hydraulic motor (21), thus enabling to make the shear press rotate in place.

17. Shear press (1) according to any one of claims 12 to 16, **characterised in that** the filling of the shear press (1) is done by means of a filling vehicle (11) with a crawler crane, and that the shear press (1) is provided with a remote control (23) for the press, shearing and traction functions of the shear press, a control (23) which is mounted in the cabin (22) of the filling vehicle (11) or that the operator can bring into his cabin (22) so as to be able to control the operations of the shear press (1) without needing to exit his cabin (22) and move the two machines (1) and (11) to remain in the proximity of one another during the filling.

18. Shear press according to any one of claims 12 to 17, **characterised in that** it is sized so as to be transportable on the road on a vehicle-carrying trailer.
